# EUROPEAN PATENT APPLICATION

(11) **EP 4 550 921 A1**
(43) Date of publication of application: **07.05.2025**
(21) Application number: 23831943.8
(22) Date of filing: 30.06.2023
(51) Int. Cl.: H04W 74/08, H04W 76/15, H04W 76/20, H04W 84/12

(54) **METHOD AND DEVICE FOR LISTEN-INTERVAL-BASED TRANSMISSION OR RECEPTION FOR MULTI-LINK DEVICE IN WIRELESS LAN SYSTEM**

(30) Priority: 01.07.2022 KR 20220081424
(71) Applicant: LG Electronics Inc., Yeongdeungpo-gu Seoul 07336 (KR)
(72) Inventor: BAEK, Sunhee, Seoul 06772 (KR); JANG, Insun, Seoul 06772 (KR); CHOI, Jinsoo, Seoul 06772 (KR)
(74) Representative: Plasseraud IP
(86) International application number: PCT/KR2023/009216
(87) International publication number: WO 2024/005585

(57) **Abstract**

A method and a device for listen-interval-based transmission or reception for a multi-link device (MLD) in a wireless LAN system are disclosed. The method performed by a station (STA) in a wireless LAN system, according to one embodiment of the present disclosure, may comprise the steps of: detecting, by the STA belonging to a non-access point (non-AP) MLD, a change in the state of one or more links from among a plurality of links; determining an updated MLD listen interval on the basis of one or more enabled links; and performing transmission or reception with an AP MLD on the basis of the updated MLD listen interval.

## Description

### [TECHNICAL FIELD]

The present disclosure relates to a listen interval-based transmission or reception method and device for a multi-link device (MLD) in a wireless local area network (WLAN) system.

### [BACKGROUND ART]

New technologies for improving transmission rates, increasing bandwidth, improving reliability, reducing errors, and reducing latency have been introduced for a wireless LAN (WLAN). Among WLAN technologies, an Institute of Electrical and Electronics Engineers (IEEE) 802.11 series standard may be referred to as Wi-Fi. For example, technologies recently introduced to WLAN include enhancements for Very High-Throughput (VHT) of the 802.11ac standard, and enhancements for High Efficiency (HE) of the IEEE 802.11ax standard.

In order to provide a more advanced wireless communication environment, improved technologies for Extremely High Throughput (EHT) are being discussed. For example, technologies for MIMO and multiple access point (AP) coordination that support increased bandwidth, efficient utilization of multiple bands, and increased spatial streams are being studied, and in particular, various technologies are being studied to support low latency or real-time traffic. Furthermore, new technologies are being discussed to support ultra high reliability (UHR), including improvements or extensions of EHT technologies.

### [Disclosure]

### [Technical Problem]

A technical problem of the present disclosure is to provide a transmission or reception method and device based on updating a listen interval for a multi-link device (MLD) after a multi-link setup in a WLAN system.

An additional technical problem of the present disclosure is to provide a method and a device for efficiently updating a listen interval for a MLD based on a change in a multi-link (ML) in a WLAN system.

The technical objects to be achieved by the present disclosure are not limited to the above-described technical objects, and other technical objects which are not described herein will be clearly understood by those skilled in the pertinent art from the following description.

### [Technical Solution]

A method performed by a station (STA) in a WLAN system according to an aspect of the present disclosure may include detecting, by a STA belonging to a non-access point (non-AP) multi-link device (MLD), a change in a state of at least one link among a plurality of links; determining an updated MLD listen interval based on at least one enabled link; and performing transmission or reception with an AP MLD based on the updated MLD listen interval.

A method performed by an access point (AP) in a WLAN system according to an additional aspect of the present disclosure may include determining, by the AP belonging to an AP multi-link device (MLD), an updated MLD listen interval based on at least one enabled link associated with a change in a state of at least one link among a plurality of links; and performing transmission or reception with a non-AP MLD based on the updated MLD listen interval.

### [Technical Effects]

According to the present disclosure, a transmission or reception method and device based on updating a listen interval for a multi-link device (MLD) after a multi-link setup in a WLAN system may be provided.

According to the present disclosure, a method and a device for efficiently updating a listen interval for a MLD based on a change in a multi-link (ML) in a WLAN system may be provided.

Effects achievable by the present disclosure are not limited to the above-described effects, and other effects which are not described herein may be clearly understood by those skilled in the pertinent art from the following description.

### [Description of Diagrams]

Accompanying drawings included as part of detailed description for understanding the present disclosure provide embodiments of the present disclosure and describe technical features of the present disclosure with detailed description.
FIG. 1 illustrates a block configuration diagram of a wireless communication device according to an embodiment of the present disclosure.
FIG. 2 is a diagram illustrating an exemplary structure of a WLAN system to which the present disclosure may be applied.
FIG. 3 is a diagram for describing a link setup process to which the present disclosure may be applied.
FIG. 4 is a diagram for describing a backoff process to which the present disclosure may be applied.
FIG. 5 is a diagram for describing a frame transmission operation based on CSMA/CA to which the present disclosure may be applied.
FIG. 6 is a diagram for describing an example of a frame structure used in a WLAN system to which the present disclosure may be applied.
FIG. 7 is a diagram illustrating examples of PPDUs defined in the IEEE 802.11 standard to which the present disclosure may be applied.
FIG. 8 is a diagram showing an example of a MLD listen interval-based operation related to the present disclosure.
FIG. 9 is a diagram showing an additional example of a MLD listen interval-based operation related to the present disclosure.
FIG. 10 is a diagram for describing an example of a method performed in a STA based on a MLD listen interval according to the present disclosure.
FIG. 11 is a diagram for describing an example of a method performed in a AP based on a MLD listen interval according to the present disclosure.
FIG. 12 is a diagram showing an example of a MLD listen interval-based operation according to the present disclosure.

### [Best Mode]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

Examples of the present disclosure may be applied to various wireless communication systems. For example, examples of the present disclosure may be applied to a wireless LAN system. For example, examples of the present disclosure may be applied to an IEEE 802.11a/g/n/ac/ax standards-based wireless LAN. Furthermore, examples of the present disclosure may be applied to a wireless LAN based on the newly proposed IEEE 802.11be (or EHT) standard. Examples of the present disclosure may be applied to an IEEE 802.11be Release-2 standard-based wireless LAN corresponding to an additional enhancement technology of the IEEE 802.11be Release-1 standard. Additionally, examples of the present disclosure may be applied to a next-generation standards-based wireless LAN after IEEE 802.11be. Further, examples of this disclosure may be applied to a cellular wireless communication system. For example, it may be applied to a cellular wireless communication system based on Long Term Evolution (LTE)-based technology and 5G New Radio (NR)-based technology of the 3rd Generation Partnership Project (3GPP) standard.

Hereinafter, technical features to which examples of the present disclosure may be applied will be described.

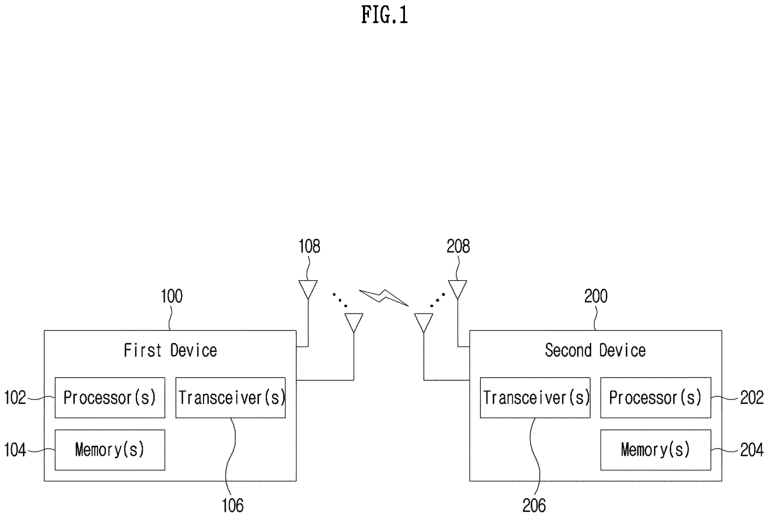

FIG. 1 illustrates a block diagram of a wireless communication device according to an embodiment of the present disclosure.

The first device 100 and the second device 200 illustrated in FIG. 1 may be replaced with various terms such as a terminal, a wireless device, a Wireless Transmit Receive Unit (WTRU), an User Equipment (UE), a Mobile Station (MS), an user terminal (UT), a Mobile Subscriber Station (MSS), a Mobile Subscriber Unit (MSU), a subscriber station (SS), an advanced mobile station (AMS), a wireless terminal (WT), or simply user, etc. In addition, the first device 100 and the second device 200 include an access point (AP), a base station (BS), a fixed station, a Node B, a base transceiver system (BTS), a network, It may be replaced with various terms such as an Artificial Intelligence (AI) system, a road side unit (RSU), a repeater, a router, a relay, and a gateway.

The devices 100 and 200 illustrated in FIG. 1 may be referred to as stations (STAs). For example, the devices 100 and 200 illustrated in FIG. 1 may be referred to by various terms such as a transmitting device, a receiving device, a transmitting STA, and a receiving STA. For example, the STAs 110 and 200 may perform an access point (AP) role or a non-AP role. That is, in the present disclosure, the STAs 110 and 200 may perform functions of an AP and/or a non-AP. When the STAs 110 and 200 perform an AP function, they may be simply referred to as APs, and when the STAs 110 and 200 perform non-AP functions, they may be simply referred to as STAs. In addition, in the present disclosure, an AP may also be indicated as an AP STA.

Referring to FIG. 1, the first device 100 and the second device 200 may transmit and receive radio signals through various wireless LAN technologies (e.g., IEEE 802.11 series). The first device 100 and the second device 200 may include an interface for a medium access control (MAC) layer and a physical layer (PHY) conforming to the IEEE 802.11 standard.

In addition, the first device 100 and the second device 200 may additionally support various communication standards (e.g., 3GPP LTE series, 5G NR series standards, etc.) technologies other than wireless LAN technology. In addition, the device of the present disclosure may be implemented in various devices such as a mobile phone, a vehicle, a personal computer, augmented reality (AR) equipment, and virtual reality (VR) equipment, etc. In addition, the STA of the present specification may support various communication services such as a voice call, a video call, data communication, autonomous-driving, machine-type communication (MTC), machine-to-machine (M2M), device-to-device (D2D), IoT (Internet-of-Things), etc.

A first device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure. For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104. A memory 104 may be connected to a processor 102 and may store a variety of information related to an operation of a processor 102. For example, a memory 104 may store a software code including instructions for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless LAN technology (e.g., IEEE 802.11 series). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a device may mean a communication modem/circuit/chip.

A second device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including instructions for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless LAN technology (e.g., IEEE 802.11 series). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a device may mean a communication modem/circuit/chip.

Hereinafter, a hardware element of a device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC). One or more processors 102, 202 may generate one or more PDUs (Protocol Data Unit) and/or one or more SDUs (Service Data Unit) according to description, functions, procedures, proposals, methods and/or operation flow charts disclosed in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, an instruction and/or a set of instructions.

One or more memories 104, 204 may be connected to one or more processors 102, 202 and may store data, a signal, a message, information, a program, a code, an indication and/or an instruction in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefore, one or more transceivers 106, 206 may include an (analogue) oscillator and/or a filter.

For example, one of the STAs 100 and 200 may perform an intended operation of an AP, and the other of the STAs 100 and 200 may perform an intended operation of a non-AP STA. For example, the transceivers 106 and 206 of FIG. 1 may perform a transmission and reception operation of a signal (e.g., a packet or a physical layer protocol data unit (PPDU) conforming to IEEE 802.11a/b/g/n/ac/ax/be). In addition, in the present disclosure, an operation in which various STAs generate transmission/reception signals or perform data processing or calculation in advance for transmission/reception signals may be performed by the processors 102 and 202 of FIG. 1. For example, an example of an operation of generating a transmission/reception signal or performing data processing or calculation in advance for the transmission/reception signal may include 1) determining / acquiring / configuring / calculating / decoding / encoding bit information of fields (signal (SIG), short training field (STF), long training field (LTF), Data, etc.) included in the PPDU, 2) determining / configuring / acquiring time resources or frequency resources (e.g., subcarrier resources) used for fields (SIG, STF, LTF, Data, etc.) included in the PPDU; 3) determining / configuring / acquiring a specific sequence (e.g., pilot sequence, STF/LTF sequence, extra sequence applied to SIG) used for fields (SIG, STF, LTF, Data, etc.) included in the PPDU action, 4) power control operation and/or power saving operation applied to the STA, 5) Operations related to ACK signal determination/acquisition/configuration/calculation/decoding/encoding, etc. In addition, in the following example, various information (e.g., information related to fields / subfields / control fields / parameters / power, etc.) used by various STAs to determine / acquire / configure / calculate / decode / encode transmission and reception signals may be stored in the memories 104 and 204 of FIG. 1.

Hereinafter, downlink (DL) may mean a link for communication from an AP STA to a non-AP STA, and a DL PPDU / packet / signal may be transmitted and received through the DL. In DL communication, a transmitter may be part of an AP STA, and a receiver may be part of a non-AP STA. Uplink (UL) may mean a link for communication from non-AP STAs to AP STAs, and a UL PPDU / packet / signal may be transmitted and received through the UL. In UL communication, a transmitter may be part of a non-AP STA, and a receiver may be part of an AP STA.

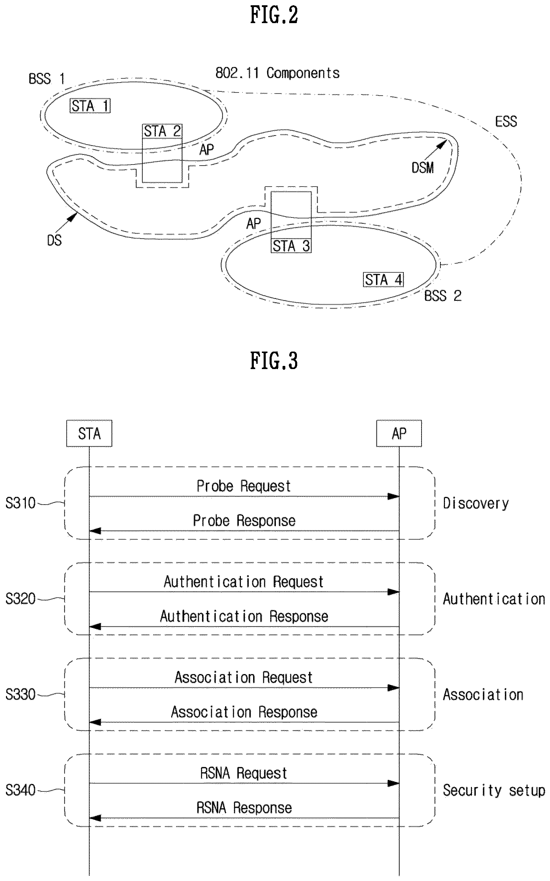

FIG. 2 is a diagram illustrating an exemplary structure of a wireless LAN system to which the present disclosure may be applied.

The structure of the wireless LAN system may consist of be composed of a plurality of components. A wireless LAN supporting STA mobility transparent to an upper layer may be provided by interaction of a plurality of components. A Basic Service Set (BSS) corresponds to a basic construction block of a wireless LAN. FIG. 2 exemplarily shows that two BSSs (BSS1 and BSS2) exist and two STAs are included as members of each BSS (STA1 and STA2 are included in BSS1, and STA3 and STA4 are included in BSS2). An ellipse representing a BSS in FIG. 2 may also be understood as representing a coverage area in which STAs included in the corresponding BSS maintain communication. This area may be referred to as a Basic Service Area (BSA). When an STA moves out of the BSA, it may not directly communicate with other STAs within the BSA.

If the DS shown in FIG. 2 is not considered, the most basic type of BSS in a wireless LAN is an independent BSS (IBSS). For example, IBSS may have a minimal form containing only two STAs. For example, assuming that other components are omitted, BSS1 containing only STA1 and STA2 or BSS2 containing only STA3 and STA4 may respectively correspond to representative examples of IBSS. This configuration is possible when STAs may communicate directly without an AP. In addition, in this type of wireless LAN, it is not configured in advance, but may be configured when a LAN is required, and this may be referred to as an ad-hoc network. Since the IBSS does not include an AP, there is no centralized management entity. That is, in IBSS, STAs are managed in a distributed manner. In IBSS, all STAs may be made up of mobile STAs, and access to the distributed system (DS) is not allowed, forming a self-contained network.

Membership of an STA in the BSS may be dynamically changed by turning on or off the STA, entering or exiting the BSS area, and the like. To become a member of the BSS, the STA may join the BSS using a synchronization process. In order to access all services of the BSS infrastructure, the STA shall be associated with the BSS. This association may be dynamically established and may include the use of a Distribution System Service (DSS).

A direct STA-to-STA distance in a wireless LAN may be limited by PHY performance. In some cases, this distance limit may be sufficient, but in some cases, communication between STAs at a longer distance may be required. A distributed system (DS) may be configured to support extended coverage.

DS means a structure in which BSSs are interconnected. Specifically, as shown in FIG. 2, a BSS may exist as an extended form of a network composed of a plurality of BSSs. DS is a logical concept and may be specified by the characteristics of Distributed System Media (DSM). In this regard, a wireless medium (WM) and a DSM may be logically separated. Each logical medium is used for a different purpose and is used by different components. These medium are not limited to being the same, nor are they limited to being different. In this way, the flexibility of the wireless LAN structure (DS structure or other network structure) may be explained in that a plurality of media are logically different. That is, the wireless LAN structure may be implemented in various ways, and the corresponding wireless LAN structure may be independently specified by the physical characteristics of each embodiment.

A DS may support a mobile device by providing seamless integration of a plurality of BSSs and providing logical services necessary to address an address to a destination. In addition, the DS may further include a component called a portal that serves as a bridge for connection between the wireless LAN and other networks (e.g., IEEE 802.X).

The AP enables access to the DS through the WM for the associated non-AP STAs, and means an entity that also has the functionality of an STA. Data movement between the BSS and the DS may be performed through the AP. For example, STA2 and STA3 shown in FIG. 2 have the functionality of STAs, and provide a function allowing the associated non-AP STAs (STA1 and STA4) to access the DS. In addition, since all APs basically correspond to STAs, all APs are addressable entities. The address used by the AP for communication on the WM and the address used by the AP for communication on the DSM are not necessarily the same. A BSS composed of an AP and one or more STAs may be referred to as an infrastructure BSS.

Data transmitted from one of the STA(s) associated with an AP to a STA address of the corresponding AP may be always received on an uncontrolled port and may be processed by an IEEE 802.1X port access entity. In addition, when a controlled port is authenticated, transmission data (or frames) may be delivered to the DS.

In addition to the structure of the DS described above, an extended service set (ESS) may be configured to provide wide coverage.

An ESS means a network in which a network having an arbitrary size and complexity is composed of DSs and BSSs. The ESS may correspond to a set of BSSs connected to one DS. However, the ESS does not include the DS. An ESS network is characterized by being seen as an IBSS in the Logical Link Control (LLC) layer. STAs included in the ESS may communicate with each other, and mobile STAs may move from one BSS to another BSS (within the same ESS) transparently to the LLC. APs included in one ESS may have the same service set identification (SSID). The SSID is distinguished from the BSSID, which is an identifier of the BSS.

The wireless LAN system does not assume anything about the relative physical locations of BSSs, and all of the following forms are possible. BSSs may partially overlap, which is a form commonly used to provide continuous coverage. In addition, BSSs may not be physically connected, and logically there is no limit on the distance between BSSs. In addition, the BSSs may be physically located in the same location, which may be used to provide redundancy. In addition, one (or more than one) IBSS or ESS networks may physically exist in the same space as one (or more than one) ESS network. When an ad-hoc network operates in a location where an ESS network exists, when physically overlapping wireless networks are configured by different organizations, or when two or more different access and security policies are required in the same location, this may correspond to the form of an ESS network in the like.

FIG. 3 is a diagram for explaining a link setup process to which the present disclosure may be applied.

In order for an STA to set up a link with respect to a network and transmit/receive data, it first discovers a network, performs authentication, establishes an association, and need to perform the authentication process for security. The link setup process may also be referred to as a session initiation process or a session setup process. In addition, the processes of discovery, authentication, association, and security setting of the link setup process may be collectively referred to as an association process.

In step S310, the STA may perform a network discovery operation. The network discovery operation may include a scanning operation of the STA. That is, in order for the STA to access the network, it needs to find a network in which it can participate. The STA shall identify a compatible network before participating in a wireless network, and the process of identifying a network existing in a specific area is called scanning.

Scanning schemes include active scanning and passive scanning. FIG. 3 exemplarily illustrates a network discovery operation including an active scanning process. In active scanning, an STA performing scanning transmits a probe request frame to discover which APs exist around it while moving channels and waits for a response thereto. A responder transmits a probe response frame as a response to the probe request frame to the STA that has transmitted the probe request frame. Here, the responder may be an STA that last transmitted a beacon frame in the BSS of the channel being scanned. In the BSS, since the AP transmits the beacon frame, the AP becomes a responder, and in the IBSS, the STAs in the IBSS rotate to transmit the beacon frame, so the responder is not constant. For example, a STA that transmits a probe request frame on channel 1 and receives a probe response frame on channel 1, may store BSS-related information included in the received probe response frame and may move to the next channel (e.g., channel 2) and perform scanning (i.e., transmission/reception of a probe request/response on channel 2) in the same manner.

Although not shown in FIG. 3, the scanning operation may be performed in a passive scanning manner. In passive scanning, a STA performing scanning waits for a beacon frame while moving channels. The beacon frame is one of the management frames defined in IEEE 802.11, and is periodically transmitted to notify the existence of a wireless network and to allow the STA performing scanning to find a wireless network and participate in the wireless network. In the BSS, the AP serves to transmit beacon frames periodically, and in the IBSS, STAs within the IBSS rotate to transmit beacon frames. When the STA performing scanning receives a beacon frame, the STA stores information for the BSS included in the beacon frame and records beacon frame information in each channel while moving to another channel. The STA receiving the beacon frame may store BSS-related information included in the received beacon frame, move to the next channel, and perform scanning in the next channel in the same way. Comparing active scanning and passive scanning, active scanning has an advantage of having less delay and less power consumption than passive scanning.

After the STA discovers the network, an authentication process may be performed in step S320. This authentication process may be referred to as a first authentication process in order to be clearly distinguished from the security setup operation of step S340 to be described later.

The authentication process includes a process in which the STA transmits an authentication request frame to the AP, and in response to this, the AP transmits an authentication response frame to the STA. An authentication frame used for authentication request/response corresponds to a management frame.

The authentication frame includes an authentication algorithm number, an authentication transaction sequence number, a status code, a challenge text, a robust security network (RSN), and a Finite Cyclic Group, etc. This corresponds to some examples of information that may be included in the authentication request/response frame, and may be replaced with other information or additional information may be further included.

The STA may transmit an authentication request frame to the AP. The AP may determine whether to allow authentication of the corresponding STA based on information included in the received authentication request frame. The AP may provide the result of the authentication process to the STA through an authentication response frame.

After the STA is successfully authenticated, an association process may be performed in step S330. The association process includes a process in which the STA transmits an association request frame to the AP, and in response, the AP transmits an association response frame to the STA.

For example, the association request frame may include information related to various capabilities, a beacon listen interval, a service set identifier (SSID), supported rates, supported channels, RSN, mobility domain, supported operating classes, Traffic Indication Map Broadcast request (TIM broadcast request), interworking service capability, etc. For example, the association response frame may include information related to various capabilities, status code, association ID (AID), supported rates, enhanced distributed channel access (EDCA) parameter set, received channel power indicator (RCPI), received signal to noise indicator (RSNI), mobility domain, timeout interval (e.g., association comeback time), overlapping BSS scan parameters, TIM broadcast response, Quality of Service (QoS) map, etc. This corresponds to some examples of information that may be included in the association request/response frame, and may be replaced with other information or additional information may be further included.

After the STA is successfully associated with the network, a security setup process may be performed in step S340. The security setup process of step S340 may be referred to as an authentication process through Robust Security Network Association (RSNA) request/response, and the authentication process of step S320 is referred to as a first authentication process, and the security setup process of step S340 may also simply be referred to as an authentication process.

The security setup process of step S340 may include, for example, a process of setting up a private key through 4-way handshaking through an Extensible Authentication Protocol over LAN (EAPOL) frame. In addition, the security setup process may be performed according to a security scheme not defined in the IEEE 802.11 standard.

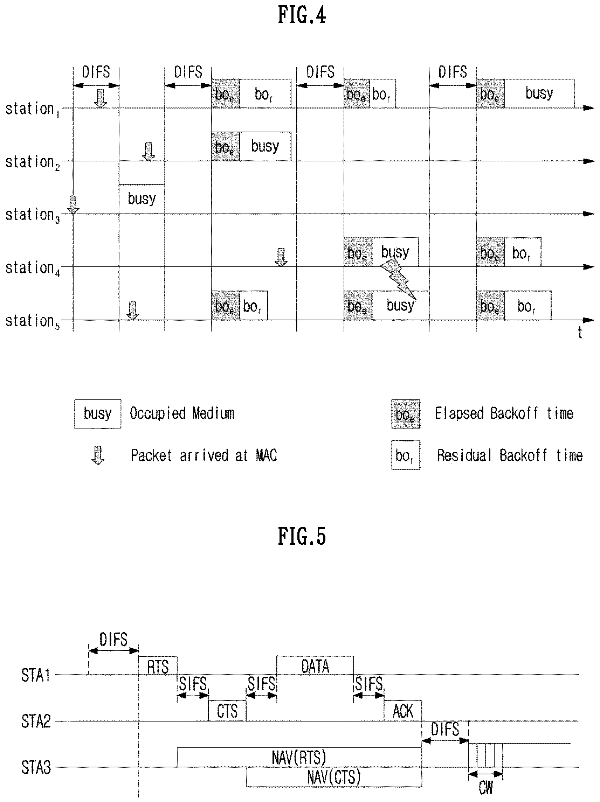

FIG. 4 is a diagram for explaining a backoff process to which the present disclosure may be applied.

In the wireless LAN system, a basic access mechanism of medium access control (MAC) is a carrier sense multiple access with collision avoidance (CSMA/CA) mechanism. The CSMA/CA mechanism is also called Distributed Coordination Function (DCF) of IEEE 802.11 MAC, and basically adopts a "listen before talk" access mechanism. According to this type of access mechanism, the AP and/or STA may perform Clear Channel Assessment (CCA) sensing a radio channel or medium during a predetermined time interval (e.g., DCF Inter-Frame Space (DIFS)), prior to starting transmission. As a result of the sensing, if it is determined that the medium is in an idle state, frame transmission is started through the corresponding medium. On the other hand, if it is detected that the medium is occupied or busy, the corresponding AP and/or STA does not start its own transmission and may set a delay period for medium access (e.g., a random backoff period) and attempt frame transmission after waiting. By applying the random backoff period, since it is expected that several STAs attempt frame transmission after waiting for different periods of time, collision may be minimized.

In addition, the IEEE 802.11 MAC protocol provides a Hybrid Coordination Function (HCF). HCF is based on the DCF and Point Coordination Function (PCF). PCF is a polling-based synchronous access method and refers to a method in which all receiving APs and/or STAs periodically poll to receive data frames. In addition, HCF has Enhanced Distributed Channel Access (EDCA) and HCF Controlled Channel Access (HCCA). EDCA is a contention-based access method for a provider to provide data frames to multiple users, and HCCA uses a non-contention-based channel access method using a polling mechanism. In addition, the HCF includes a medium access mechanism for improving QoS (Quality of Service) of the wireless LAN, and may transmit QoS data in both a Contention Period (CP) and a Contention Free Period (CFP).

Referring to FIG. 4, an operation based on a random backoff period will be described. When the occupied/busy medium changes to an idle state, several STAs may attempt to transmit data (or frames). As a method for minimizing collisions, each of STAs may respectively select a random backoff count and attempt transmission after waiting for a corresponding slot time. The random backoff count has a pseudo-random integer value and may be determined as one of values ranging from 0 to CW. Here, CW is a contention window parameter value. The CW parameter is given CWmin as an initial value, but may take a value twice as large in case of transmission failure (e.g., when an ACK for the transmitted frame is not received). When the CW parameter value reaches CWmax, data transmission may be attempted while maintaining the CWmax value until data transmission is successful, and when data transmission is successful, the CWmin value is reset. The values of CW, CWmin and CWmax are preferably set to 2ⁿ-1 (n = 0, 1, 2, ...).

When the random backoff process starts, the STA continuously monitors the medium while counting down the backoff slots according to the determined backoff count value. When the medium is monitored for occupancy, it stops counting down and waits, and resumes the rest of the countdown when the medium becomes idle.

In the example of FIG. 4, when a packet to be transmitted arrives at the MAC of STA3, STA3 may transmit the frame immediately after confirming that the medium is idle as much as DIFS. The remaining STAs monitor and wait for the medium to be occupied/busy. In the meantime, data to be transmitted may also occur in each of STA1, STA2, and STA5, and each STA waits as long as DIFS when the medium is monitored as idle, and then may perform a countdown of the backoff slot according to the random backoff count value selected by each STA. Assume that STA2 selects the smallest backoff count value and STA1 selects the largest backoff count value. That is, the case where the remaining back-off time of STA5 is shorter than the remaining back-off time of STA1 at the time when STA2 completes the back-off count and starts frame transmission is exemplified. STA1 and STA5 temporarily stop counting down and wait while STA2 occupies the medium. When the occupation of STA2 ends and the medium becomes idle again, STA1 and STA5 wait for DIFS and resume the stopped backoff count. That is, frame transmission may be started after counting down the remaining backoff slots for the remaining backoff time. Since the remaining backoff time of STA5 is shorter than that of STA1, STA5 starts frame transmission. While STA2 occupies the medium, data to be transmitted may also occur in STA4. From the standpoint of STA4, when the medium becomes idle, STA4 may wait for DIFS, and then may perform a countdown according to the random backoff count value selected by the STA4 and start transmitting frames. The example of FIG. 4 shows a case where the remaining backoff time of STA5 coincides with the random backoff count value of STA4 by chance. In this case, a collision may occur between STA4 and STA5. When a collision occurs, both STA4 and STA5 do not receive an ACK, so data transmission fails. In this case, STA4 and STA5 may double the CW value, select a random backoff count value, and perform a countdown. STA1 waits while the medium is occupied due to transmission of STA4 and STA5, waits for DIFS when the medium becomes idle, and then starts frame transmission after the remaining backoff time has elapsed.

As in the example of FIG. 4, the data frame is a frame used for transmission of data forwarded to a higher layer, and may be transmitted after a backoff performed after DIFS elapses from when the medium becomes idle. Additionally, the management frame is a frame used for exchange of management information that is not forwarded to a higher layer, and is transmitted after a backoff performed after an IFS such as DIFS or Point Coordination Function IFS (PIFS). As a subtype frames of management frame, there are a Beacon, an association request/response, a re-association request/response, a probe request/response, an authentication request/response, etc. A control frame is a frame used to control access to a medium. As a subtype frames of control frame, there are Request-To-Send (RTS), Clear-To-Send (CTS), Acknowledgement (ACK), Power Save-Poll (PS-Poll), block ACK (BlockAck), block ACK request (BlockACKReq), null data packet announcement (NDP announcement), and trigger, etc. If the control frame is not a response frame of the previous frame, it is transmitted after backoff performed after DIFS elapses, and if it is a response frame of the previous frame, it is transmitted without performing backoff after short IFS (SIFS) elapses. The type and subtype of the frame may be identified by a type field and a subtype field in a frame control (FC) field.

A Quality of Service (QoS) STA may perform the backoff that is performed after an arbitration IFS (AIFS) for an access category (AC) to which the frame belongs, that is, AIFS[i] (where i is a value determined by AC), and then may transmit the frame. Here, the frame in which AIFS[i] can be used may be a data frame, a management frame, or a control frame other than a response frame.

FIG. 5 is a diagram for explaining a frame transmission operation based on CSMA/CA to which the present disclosure may be applied.

As described above, the CSMA/CA mechanism includes virtual carrier sensing in addition to physical carrier sensing in which a STA directly senses a medium. Virtual carrier sensing is intended to compensate for problems that may occur in medium access, such as a hidden node problem. For virtual carrier sensing, the MAC of the STA may use a Network Allocation Vector (NAV). The NAV is a value indicating, to other STAs, the remaining time until the medium is available for use by an STA currently using or having the right to use the medium. Therefore, the value set as NAV corresponds to a period in which the medium is scheduled to be used by the STA transmitting the frame, and the STA receiving the NAV value is prohibited from accessing the medium during the corresponding period. For example, the NAV may be configured based on the value of the "duration" field of the MAC header of the frame.

In the example of FIG. 5, it is assumed that a STA1 intends to transmit data to a STA2, and a STA3 is in a position capable of overhearing some or all of frames transmitted and received between the STA1 and the STA2.

In order to reduce the possibility of collision of transmissions of multiple STAs in CSMA/CA based frame transmission operation, a mechanism using RTS/CTS frames may be applied. In the example of FIG. 5, while transmission of the STA1 is being performed, as a result of carrier sensing of the STA3, it may be determined that the medium is in an idle state. That is, the STA1 may correspond to a hidden node to the STA3. Alternatively, in the example of FIG. 5, it may be determined that the carrier sensing result medium of the STA3 is in an idle state while transmission of the STA2 is being performed. That is, the STA2 may correspond to a hidden node to the STA3. Through the exchange of RTS / CTS frames before performing data transmission and reception between the STA1 and the STA2, a STA outside the transmission range of one of the STA1 or the STA2, or a STA outside the carrier sensing range for transmission from the STA1 or the STA3 may not attempt to occupy the channel during data transmission and reception between the STA1 and the STA2.

Specifically, the STA1 may determine whether a channel is being used through carrier sensing. In terms of physical carrier sensing, the STA1 may determine a channel occupation idle state based on an energy level or signal correlation detected in a channel. In addition, in terms of virtual carrier sensing, the STA1 may determine a channel occupancy state using a network allocation vector (NAV) timer.

The STA1 may transmit an RTS frame to the STA2 after performing a backoff when the channel is in an idle state during DIFS. When the STA2 receives the RTS frame, the STA2 may transmit a CTS frame as a response to the RTS frame to the STA1 after SIFS.

If the STA3 cannot overhear the CTS frame from the STA2 but can overhear the RTS frame from the STA1, the STA3 may set a NAV timer for a frame transmission period (e.g., SIFS + CTS frame + SIFS + data frame + SIFS + ACK frame) that is continuously transmitted thereafter, using the duration information included in the RTS frame. Alternatively, if the STA3 can overhear a CTS frame from the STA2 although the STA3 cannot overhear an RTS frame from the STA1, the STA3 may set a NAV timer for a frame transmission period (e.g., SIFS + data frame + SIFS + ACK frame) that is continuously transmitted thereafter, using the duration information included in the CTS frame. That is, if the STA3 can overhear one or more of the RTS or CTS frames from one or more of the STA1 or the STA2, the STA3 may set the NAV accordingly. When the STA3 receives a new frame before the NAV timer expires, the STA3 may update the NAV timer using duration information included in the new frame. The STA3 does not attempt channel access until the NAV timer expires.

When the STA1 receives the CTS frame from the STA2, the STA1 may transmit the data frame to the STA2 after SIFS from the time point when the reception of the CTS frame is completed. When the STA2 successfully receives the data frame, the STA2 may transmit an ACK frame as a response to the data frame to the STA1 after SIFS. The STA3 may determine whether the channel is being used through carrier sensing when the NAV timer expires. When the STA3 determines that the channel is not used by other terminals during DIFS after expiration of the NAV timer, the STA3 may attempt channel access after a contention window (CW) according to a random backoff has passed.

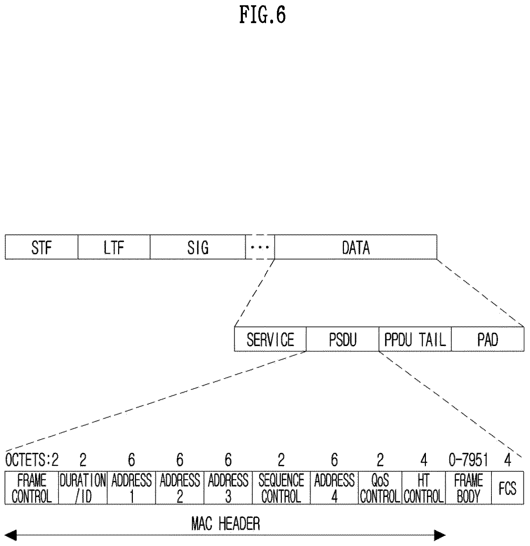

FIG. 6 is a diagram for explaining an example of a frame structure used in a WLAN system to which the present disclosure may be applied.

By means of an instruction or primitive (meaning a set of instructions or parameters) from the MAC layer, the PHY layer may prepare a MAC PDU (MPDU) to be transmitted. For example, when a command requesting transmission start of the PHY layer is received from the MAC layer, the PHY layer switches to the transmission mode and configures information (e.g., data) provided from the MAC layer in the form of a frame and transmits it. In addition, when the PHY layer detects a valid preamble of the received frame, the PHY layer monitors the header of the preamble and sends a command notifying the start of reception of the PHY layer to the MAC layer.

In this way, information transmission/reception in a wireless LAN system is performed in the form of a frame, and for this purpose, a PHY layer protocol data unit (PPDU) frame format is defined.

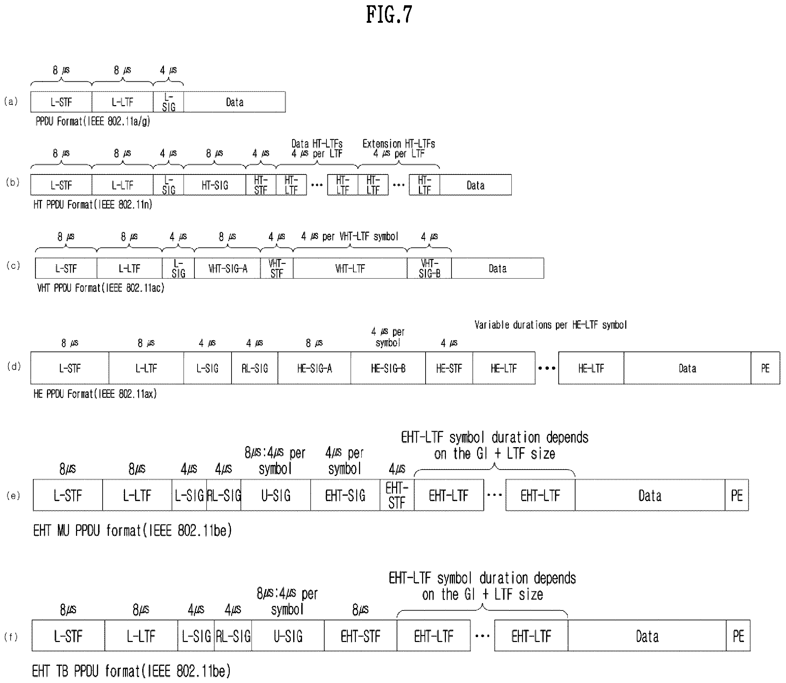

A basic PPDU may include a Short Training Field (STF), Long Training Field (LTF), SIGNAL (SIG) field, and Data (Data) field. The most basic PPDU format (e.g., non-HT (High Throughput) shown in FIG. 7) may consist of only the Legacy-STF (L-STF), Legacy-LTF (L-LTF), Legacy-SIG (L-SIG) fields, and data fields. Additionally, depending on the type of PPDU format (e.g., HT-mixed format PPDU, HT-greenfield format PPDU, VHT (Very High Throughput) PPDU, etc.), additional (or different types) of RL-SIG, U-SIG, non-legacy SIG fields, non-legacy STF, non-legacy LTF (i.e., xx-SIG, xx-STF, xx-LTF (e.g. xx is HT, VHT, HE, EHT, etc.)), etc. may be included between the L-SIG field and the data field.

The STF is a signal for signal detection, automatic gain control (AGC), diversity selection, precise time synchronization, and the like, and the LTF is a signal for channel estimation and frequency error estimation. The STF and LTF may be referred to as signals for synchronization and channel estimation of the OFDM physical layer.

The SIG field may include various information related to PPDU transmission and reception. For example, the L-SIG field consists of 24 bits and the L-SIG field may include 4-bit Rate field, 1-bit Reserved bit, 12-bit Length field, 1-bit Parity field, and 6-bit Tail field. The RATE field may include information about the modulation and coding rate of data. For example, the 12-bit Length field may include information about the length or time duration of the PPDU. For example, the value of the 12-bit Length field may be determined based on the type of PPDU. For example, for non-HT, HT, VHT, or EHT PPDU, the value of the Length field may be determined to be a multiple of 3. For example, for a HE PPDU, the value of the Length field may be determined as a multiple of 3 + 1 or a multiple of 3 + 2.

The data field may include a SERVICE field, a physical layer service data unit (PSDU), and a PPDU TAIL bit, and may also include padding bits if necessary. Some bits of the SERVICE field may be used for synchronization of the descrambler at the receiving end. The PSDU corresponds to the MAC PDU defined in the MAC layer, and may include data generated/used in the upper layer. The PPDU TAIL bit may be used to return the encoder to a 0 state. Padding bits may be used to adjust the length of a data field in a predetermined unit.

A MAC PDU is defined according to various MAC frame formats, and a basic MAC frame consists of a MAC header, a frame body, and a Frame Check Sequence (FCS). The MAC frame may consist of MAC PDUs and be transmitted/received through the PSDU of the data part of the PPDU frame format.

The MAC header includes a Frame Control field, a Duration/ID field, an Address field, and the like. The frame control field may include control information required for frame transmission/reception. The duration/ID field may be set to a time for transmitting a corresponding frame or the like. For details of the Sequence Control, QoS Control, and HT Control subfields of the MAC header, refer to the IEEE 802.11 standard document.

The null-data PPDU (NDP) format refers to a PPDU format that does not include a data field. In other words, NDP refers to a frame format that includes the PPDU preamble in a general PPDU format (i.e., L-STF, L-LTF, L-SIG fields, and additionally non-legacy SIG, non-legacy STF, non-legacy LTF if present) and does not include the remaining part (i.e., data field).

FIG. 7 is a diagram illustrating examples of PPDUs defined in the IEEE 802.11 standard to which the present disclosure may be applied.

In standards such as IEEE 802.11a/g/n/ac/ax, various types of PPDUs have been used. The basic PPDU format (IEEE 802.11a/g) includes L-LTF, L-STF, L-SIG and Data fields. The basic PPDU format may also be referred to as a non-HT PPDU format(as shown in FIG. 7(a)).

The HT PPDU format (IEEE 802.11n) additionally includes HT-SIG, HT-STF, and HT-LFT(s) fields to the basic PPDU format. The HT PPDU format shown in FIG. 7(b) may be referred to as an HT-mixed format. In addition, an HT-greenfield format PPDU may be defined, and this corresponds to a format consisting of HT-GF-STF, HT-LTF1, HT-SIG, one or more HT-LTF, and Data field, not including L-STF, L-LTF, and L-SIG (not shown).

An example of the VHT PPDU format (IEEE 802.11ac) additionally includes VHT SIG-A, VHT-STF, VHT-LTF, and VHT-SIG-B fields to the basic PPDU format(as shown in FIG. 7(c)).

An example of the HE PPDU format (IEEE 802.11ax) additionally includes Repeated L-SIG (RL-SIG), HE-SIG-A, HE-SIG-B, HE-STF, HE-LTF(s), Packet Extension (PE) field to the basic PPDU format(as shown in FIG 7(d)). Some fields may be excluded or their length may vary according to detailed examples of the HE PPDU format. For example, the HE-SIG-B field is included in the HE PPDU format for multi-user (MU), and the HE-SIG-B is not included in the HE PPDU format for single user (SU). In addition, the HE trigger-based (TB) PPDU format does not include the HE-SIG-B, and the length of the HE-STF field may vary to 8 us. The Extended Range (HE ER) SU PPDU format does not include the HE-SIG-B field, and the length of the HE-SIG-A field may vary to 16us. For example, RL-SIG may be configured the same as L-SIG. The receiving STA can know that the received PPDU is a HE PPDU or an EHT PPDU, which will be described later, based on the presence of the RL-SIG.

The EHT PPDU format may include the EHT MU (multi-user) in FIG. 7(e) and the EHT TB (trigger-based) PPDU in FIG. 7(f). The EHT PPDU format is similar to the HE PPDU format in that it includes RL-SIG followed by L-SIG, but may include U(universal)-SIG, EHT-SIG, EHT-STF, and EHT-LTF following RL-SIG.

The EHT MU PPDU in FIG. 7(e) corresponds to a PPDU carrying one or more data (or PSDU) for one or more users. That is, the EHT MU PPDU may be used for both SU transmission and MU transmission. For example, the EHT MU PPDU may correspond to a PPDU for one receiving STA or multiple receiving STAs.

The EHT TB PPDU in FIG. 7(f) omits the EHT-SIG compared to the EHT MU PPDU. An STA that receives a trigger (e.g., trigger frame or triggered response scheduling (TRS)) for UL MU transmission may perform UL transmission based on the EHT TB PPDU format.

L-STF, L-LTF, L-SIG, RL-SIG, U-SIG (Universal SIGNAL), EHT-SIG fields may be encoded and modulated so that even legacy STAs may attempt demodulation and decoding, and may be mapped based on a determined subcarrier frequency interval (e.g., 312.5 kHz). These may be referred to as pre-EHT modulated fields. Next, the EHT-STF, EHT-LTF, Data, PE fields may be encoded and modulated to be demodulated and decoded by an STA that successfully decodes the non-legacy SIG (e.g., U-SIG and/or EHT-SIG) and obtains the information included in the field, and may be mapped based on a determined subcarrier frequency interval (e.g., 78.125kHz). These may be referred to as EHT modulated fields.

Similarly, in the HE PPDU format, the L-STF, L-LTF, L-SIG, RL-SIG, HE-SIG-A, and HE-SIG-B fields may be referred to as pre-HE modulation fields, and the HE-STF, HE-LTF, Data, and PE fields may be referred to as HE modulation fields. Additionally, in the VHT PPDU format, the L-STF, L-LTF, L-SIG, and VHT-SIG-A fields may be referred to as free VHT modulation fields, and VHT STF, VHT-LTF, VHT-SIG-B, and Data fields may be referred to as VHT modulation fields.

The U-SIG included in the EHT PPDU format of FIG. 7 may be configured based on, for example, two symbols (e.g., two consecutive OFDM symbols). Each symbol (e.g., OFDM symbol) for U-SIG may have a duration of 4us, and U-SIG may have a total duration of 8us. Each symbol of U-SIG may be used to transmit 26 bits of information. For example, each symbol of U-SIG can be transmitted and received based on 52 data tones and 4 pilot tones.

U-SIG may be constructed in units of 20 MHz. For example, if an 80 MHz PPDU is constructed, the U-SIG may be duplicated. That is, the same 4 U-SIGs may be included in the 80 MHz PPDU. PPDUs exceeding 80 MHz bandwidth may include different U-SIGs.

For example, A number of uncoded bits may be transmitted through U-SIG, the first symbol of U-SIG (e.g., U-SIG-1 symbol) may transmit the first X bits of information out of the total A bits of information, and the second symbol of U-SIG (e.g., U-SIG-2 symbol) may transmit the remaining Y bit information of the total A bit information. A-bit information (e.g., 52 uncoded bits) may include a CRC field (e.g., a 4-bit long field) and a tail field (e.g., a 6-bit long field). For example, the tail field may be used to terminate the trellis of the convolutional decoder and may be set to 0.

A bit information transmitted by U-SIG may be divided into version-independent bits and version-dependent bits. For example, U-SIG may be included in a new PPDU format not shown in FIG. 7 (e.g., UHR PPDU format), and in the format of the U-SIG field included in the EHT PPDU format and the format of the U-SIG field included in the UHR PPDU format, version-independent bits may be the same, and some or all of the version-dependent bits may be different.

For example, the size of the version-independent bits of U-SIG may be fixed or variable. Version-independent bits may be assigned only to the U-SIG-1 symbol, or to both the U-SIG-1 symbol and the U-SIG-2 symbol. Version-independent bits and version-dependent bits may be called various names, such as first control bit and second control bit.

For example, the version-independent bits of U-SIG may include a 3-bit physical layer version identifier (PHY version identifier), and this information may indicate the PHY version (e.g., EHT, UHR, etc.) of the transmitted/received PPDU. The version-independent bits of U-SIG may include a 1-bit UL/DL flag field. The first value of the 1-bit UL/DL flag field is related to UL communication, and the second value of the UL/DL flag field is related to DL communication. The version-independent bits of U-SIG may include information about the length of transmission opportunity (TXOP) and information about the BSS color ID.

For example, the version-dependent bits of U-SIG may include information directly or indirectly indicating the type of PPDU (e.g., SU PPDU, MU PPDU, TB PPDU, etc.).

Information necessary for PPDU transmission and reception may be included in U-SIG. For example, U-SIG may further include information about whether information on bandwidth, information on the MCS technique applied to the non-legacy SIG (e.g., EHT-SIG or UHR-SIG, etc.), information indicating whether the DCM (dual carrier modulation) technique (e.g., a technique to achieve an effect similar to frequency diversity by reusing the same signal on two subcarriers) is applied to the non-legacy SIG, information on the number of symbols used for the non-legacy SIG, non-legacy SIG is generated across the entire band.

Some of the information required for PPDU transmission and reception may be included in U-SIG and/or non-legacy SIG (e.g., EHT-SIG or UHR-SIG, etc.). For example, information on the type of non-legacy LTF/STF (e.g., EHT-LTF/EHT-STF or UHR-LTF/UHR-STF, etc.), information on the length of the non-legacy LTF and CP (cyclic prefix) length, information on GI (guard interval) applicable to non-legacy LTF, information on preamble puncturing applicable to PPDU, information on RU (resource unit) allocation, etc. may be included only in the U-SIG, only in the non-legacy SIG, or may be indicated by a combination of information included in the U-SIG and information included in the non-legacy SIG.

Preamble puncturing may mean transmission of a PPDU in which a signal does not exist in one or more frequency units among the bandwidth of the PPDU. For example, the size of the frequency unit (or resolution of preamble puncturing) may be defined as 20MHz, 40MHz, etc. For example, preamble puncturing may be applied to a PPDU bandwidth of a predetermined size or more.

In the example of FIG. 7, non-legacy SIGs such as HE-SIG-B and EHT-SIG may include control information for the receiving STA. A non-legacy SIG may be transmitted over at least one symbol, and one symbol may have a length of 4us. Information about the number of symbols used for the EHT-SIG may be included in previous SIGs (e.g., HE-SIG-A, U-SIG, etc.).

Non-legacy SIGs such as HE-SIG-B and EHT-SIG may include common fields and user-specific fields. Common fields and user-specific fields may be coded separately.

In some cases, common fields may be omitted. For example, in a compression mode where non-OFDMA (orthogonal frequency multiple access) is applied, the common field may be omitted, and multiple STAs may receive a PPDU (e.g., a data field of the PPDU) through the same frequency band. In a non-compressed mode where OFDMA is applied, multiple users may receive a PPDU (e.g., a data field of the PPDU) through different frequency bands.

The number of user-specific fields may be determined based on the number of users. One user block field may include up to two user fields. Each user field may be associated with a MU-MIMO allocation or may be associated with a non-MU-MIMO allocation.

The common field may include a CRC bit and a Tail bit, and the length of the CRC bit may be determined to be 4 bits, and the length of the Tail bit may be determined to be 6 bits and set to 000000. The common field may include RU allocation information. RU allocation information may include information about the location of the RU to which multiple users (i.e., multiple receiving STAs) are assigned.

RU may include multiple subcarriers (or tones). RU may be used when transmitting signals to multiple STAs based on OFDMA technique. Additionally, RU may be defined even when transmitting a signal to one STA. Resources may be allocated in RU units for non-legacy STF, non-legacy LTF, and Data fields.

An RU of applicable size may be defined according to the PPDU bandwidth. RU may be defined identically or differently for the applied PPDU format (e.g., HE PPDU, EHT PPDU, UHR PPDU, etc.). For example, in the case of 80MHz PPDU, the RU placement of HE PPDU and EHT PPDU may be different. applicable RU size, number of RU, and RU location for each PPDU bandwidth, DC (direct current) subcarrier location and number, null subcarrier location and number, guard subcarrier location and number, etc. may be referred to as a tone-plan. For example, a tone-plan for high bandwidth may be defined in the form of multiple iterations of a low-bandwidth tone-plan.

RUs of various sizes may be defined as 26-tone RU, 52-tone RU, 106-tone RU, 242-tone RU, 484-tone RU, 996-tone RU, 2X996-tone RU, 3X996-tone RU, etc. MRU (multiple RU) is distinguished from a plurality of individual RUs and corresponds to a group of subcarriers composed of a plurality of RUs. For example, one MRU may be defined as 52+26-tone, 106+26-tone, 484+242-tone, 996+484-tone, 996+484+242-tone, 2X996+484-tone, 3X996-tone, or 3X996+484-tone. Additionally, a plurality of RUs constituting one MRU may or may not be continuous in the frequency domain.

The specific size of the RU may be reduced or expanded. Accordingly, the specific size of each RU (i.e., the number of corresponding tones) in the present disclosure is not limiting and is illustrative. Additionally, in the present disclosure, within a predetermined bandwidth (e.g., 20, 40, 80, 160, 320 MHz, ...), the number of RUs may vary depending on the RU size.

The names of each field in the PPDU formats of FIG. 7 are exemplary, and the scope of the present disclosure is not limited by the names. In addition, examples of the present disclosure may be applied to the PPDU format illustrated in FIG. 7 as well as to a new PPDU format in which some fields are excluded and/or some fields are added based on the PPDU formats of FIG. 7.

### Multi-link Operation

Hereinafter, a multi-link operation supported by a STA according to the present disclosure will be described.

A STA (an AP STA and/or a non-AP STA) described in the present disclosure may support multi link (ML) communication. ML communication may refer to communication supporting a plurality of links. A link related to ML communication may include a channel (e.g., 20/40/80/160/240/320MHz channels) in a frequency band in which a STA operates (e.g., a 2.4GHz band, a 5GHz band, a 6GHz band, etc.). A plurality of links used for ML communication may be configured in various ways. For example, a plurality of links supported by one STA for ML communication may belong to the same frequency band or belong to a different frequency band. In addition, each link may correspond to a frequency unit in a predetermined size (e.g., a channel, a subchannel, a RU, etc.). In addition, all or part of a plurality of links may be a frequency unit in the same size or may be a frequency unit in a different size.

When one STA supports a plurality of links, a transmitting or receiving device supporting each link may operate like one logical STA. In other words, a MLD refers to a device which has at least one affiliated STA as a logical entity and has a single MAC service access point (SAP) for one MAC data service and logical link control (LLC). A non-AP MLD refers to a MLD that each STA affiliated with a corresponding MLD is a non-AP STA. A multi-radio non-AP MLD refers to a non-AP MLD that supports reception or exchange of a frame in at least one link at a time. An AP MLD refers to a MLD that each STA affiliated with a corresponding MLD is an AP STA.

A multi-link operation (MLO) may enable a non-AP MLD to discover, authenticate and associate an AP MLD and set up a plurality of links. Based on a supported capability exchanged during an association procedure, each link may enable channel access and frame exchange between a non-AP MLD and an AP MLD. A STA affiliated with a MLD may select and manage its capability and operation parameter independently from other STA(s) affiliated with the same MLD.

Through a multi-link setup process, an AP MLD and/or a non-AP MLD may transmit or receive link-related information which may be supported by a corresponding MLD. Link-related information may include at least one of whether it is a simultaneous transmit and receive (STR) operation capable of simultaneous transmission or reception on a plurality of links or a non-simultaneous transmit and receive (NSTR) operation incapable of simultaneous transmission or reception, information on the number/upper limit of UL/DL links, information on a location/a band/a resource of an UL/DL link, information on a frame type (e.g., management, control, data) available or preferred in at least one UL/DL link, information on an ACK policy available or preferred in at least one UL/DL link or information on a traffic identifier (TID) available in at least one UL/DL link supported by a corresponding MLD.

An AP MLD (e.g., a NSTR mobile AP MLD) may configure one link among a plurality of links as a primary link. An AP MLD may perform a beacon frame, a probe response frame and a group addressed data frame only on a primary link. The remaining other link(s) of a plurality of links may be referred to as a non-primary link. An AP MLD operating on a non-primary link may operate not to transmit a beacon frame or a probe response frame. In addition, a non-AP MLD may perform frame exchange during authentication, (re)association and 4-way handshaking only on a primary link.

When at least one traffic identifier (TID) is mapped to a corresponding link through a multi-link setup process, a setup link may be defined as being enabled and when there is no TID mapped to a corresponding link, a setup link may be defined as being disabled. A TID should be always mapped to at least one setup link unless admission control is used. Basically, a TID is mapped to all setup links, so all setup links may be activated.

When a link is activated, a corresponding link may be used for frame exchange according to a power state of a non-AP STA operating in a corresponding link. Only a MSDU or an A-MSDU with a TID mapped to an active link may be transmitted in a corresponding link. A management frame and a control frame may be transmitted only in an active link.

When a link is deactivated, a corresponding link may not be used for frame exchange by including a management frame for both a DL and an UL.

In a multi-link setup process, activation/deactivation of each link may be indicated through TID-to-Link mapping. TID-to-Link mapping may be performed in a default mapping mode or/and a negotiation mapping mode.

One STA among STAs belonging to a MLD may provide information on at least one link other than its link for multi-link discovery (e.g., obtain information on a plurality of links including a corresponding link on one link) or multi-link setup (e.g., simultaneous association on a plurality of links through exchange between an association request/response frame on one link). To provide this information, a multi-link (ML) element may be defined.

### AP and AP MLD Aging Function

An AP aging function or an AP MLD aging function may be defined so that a buffered BU is not discarded after a shorter period than indicated by a STA for a buffered bufferable unit (BU) in the listen interval field of a (re)association request frame. In other words, according to an AP aging function or an AP MLD aging function, buffered data (e.g., a DL BU) for a corresponding STA may be discarded after a STA's listen interval has elapsed.

This aging function may be implemented in various ways. In addition, an aging function may be applied independently or additionally to other causes for MSDU discarding in a MAC entity (e.g., a data lifetime-related operation).

### Listen Interval Field

For a normal (re)association (or not a MLD association), a listen interval field may be used to inform an AP of how often a STA in a power-save mode wakes up and listens to beacon frames. It may also be used to inform an AP of a duration for which a STA that a non-TIM mode is enabled is required to transmit at least one frame addressed to an associated AP. This listen interval field may have a value in a unit of a beacon interval or a value in a unit of a short beacon interval.

For a (re)association for a MLD association, a listen interval field may be used to inform an AP MLD of how often at least one STA belonging to a non-AP MLD wakes up and listens to beacon frames when all STAs belonging to a non-AP MLD are in a power-save mode. This listen interval field may have a value whose unit is the maximum value among a plurality of beacon intervals corresponding to a plurality of links that a non-AP MLD wants to set up in a (re)association request frame.

The length of a listen interval field may be 2 octets. 0, the value of a listen interval field, may be used by a STA that does not belong to a MLD or may be used when all STAs belonging to a non-AP MLD do not enter a power-save mode.

For a normal (re)association (not a MLD association), an AP may use a listen interval to determine the lifetime of a frame buffered for a STA.

For a (re)association for a MLD association, an AP may use a listen interval to determine the lifetime of a frame buffered for a non-AP MLD.

### Operation for MLD Listen Interval

During a multi-link (ML) (re)setup, a value included in the listen interval field of a (re)association request frame transmitted by a non-AP STA belonging to a non-AP MLD to an AP belonging to an AP MLD is requested at a MLD level. The value of a listen interval field may have a value whose unit is the maximum value among a plurality of beacon intervals corresponding to a plurality of links that a non-AP MLD wants to set up in a (re)association request frame. An AP belonging to an AP MLD may reject a (re)setup because a listen interval requested by a non-AP MLD is too large. After a successful ML (re)setup, an AP MLD may use a listen interval to determine the lifetime of a frame buffered for a non-AP MLD. For example, the value of a listen interval field may be defined as not changing after a successful ML (re)setup.

An AP MLD may delete a buffered BU for various reasons including the use of an aging function and the availability of a buffer (e.g., an AP MLD aging function, etc.). Here, an aging function may be based on a listen interval indicated by a non-AP MLD in a (re)association request frame or a wireless network management (WNM) sleep interval specified by the non-AP MLD of a request frame in a WNM sleep mode.

When all non-AP STAs belonging to a non-AP MLD and operating on enabled links are in a power-save mode, at least one of these non-AP STAs needs to wake up and listen to at least one beacon frame. Such an at least one beacon frame is scheduled within an interval with the same duration as a listen interval indicated by a non-AP MLD in a (re)association request frame, which may start from the last target beacon transmission time (TBTT) during which a corresponding non-AP STA belonging to a corresponding non-AP MLD or another non-AP STA was in an awake state.

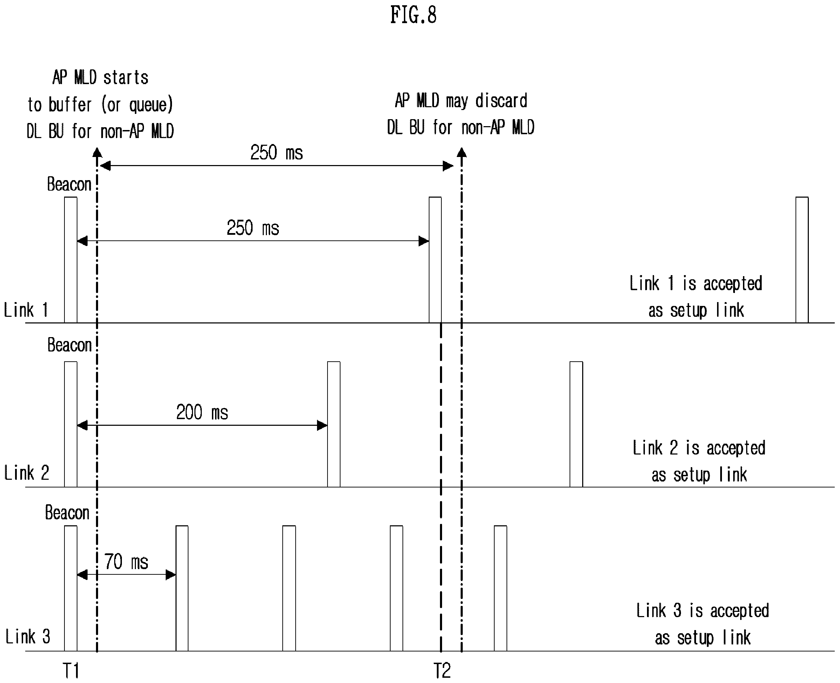

FIG. 8 is a diagram showing an example of a MLD listen interval-based operation related to the present disclosure.

In the example of FIG. 8, it is assumed that an AP MLD has three affiliated APs, i.e., AP 1 operating on link 1, AP 2 operating on link 2 and AP 3 operating on link 3. It is assumed that the beacon interval of link 1, link 2 and link 3 is 250ms, 200ms and 70ms, respectively.

Non-AP STA 1 belonging to a non-AP MLD may transmit an association request frame to AP 1 belonging to an AP MLD. Non-AP STA 1 may request a setup for three links (i.e., link 1 between AP 1 and non-AP STA 1, link 2 between AP 2 and non-AP STA 2 and link 3 between AP 3 and non-AP STA 3). The value of a listen interval field included in an association request frame may be configured as 1 and that value corresponds to a value in a unit of the maximum beacon interval (i.e., 250ms). Accordingly, the value of a listen interval requested by a non-AP MLD is 250ms.

AP 1 belonging to an AP MLD may accept three links (i.e., link 1 between AP 1 and non-AP STA 1, link 2 between AP 2 and non-AP STA 2 and link 3 between AP 3 and non-AP STA 3) for a ML setup by transmitting an association response frame to non-AP STA 1 belonging to a non-AP MLD.

After a successful ML setup, non-AP STA 2 and non-AP STA 3 may enter a power-save mode. After that, non-AP STA 1 may enter a power-save mode. For example, a PM set to a value of 1 may be signaled.

In this case, an AP MLD may buffer DL BU(s) for a non-AP MLD for at least 250ms. For example, at the time point T1, non-AP STA 1 is required to receive a beacon frame on link 1 and a non-AP STA belonging to a non-AP MLD is required to wake up before the time point T2 (e.g., T2 = T1 + 250ms) to receive at least one beacon frame. For example, non-AP STA 1 may receive the second beacon frame on link 1 (at T1 + 250ms), or non-AP STA 2 may receive the second beacon frame on link 2 (at T1 + 200ms), or non-AP STA 3 may receive the fourth beacon frame on link 3 (at T1 + 280ms). For brevity, the example of FIG. 8 illustratively shows a case in which the first beacon frame on all links is aligned to the same time point, but actually, the first TBTT on all links may not be aligned.

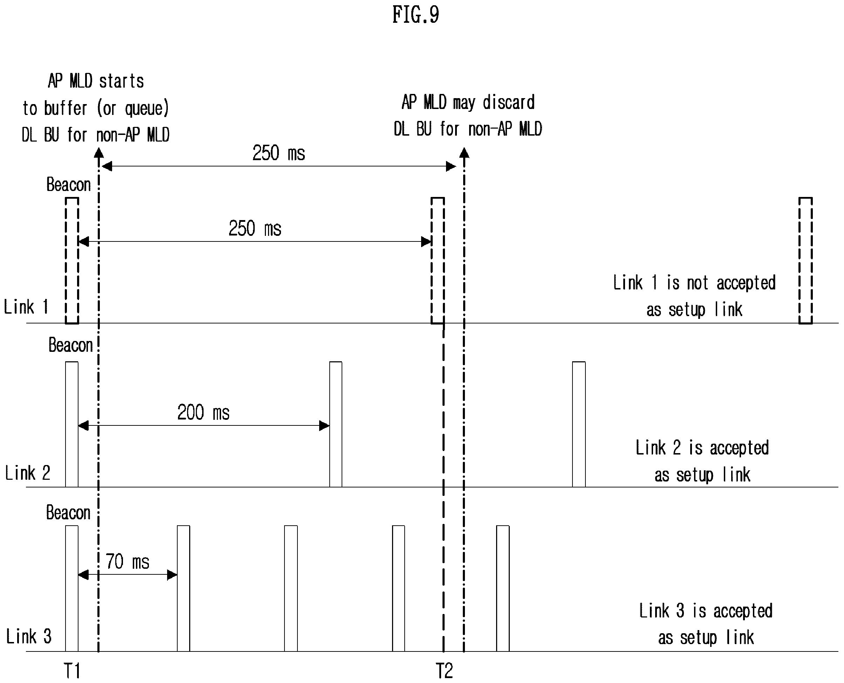

FIG. 9 is a diagram showing an additional example of a MLD listen interval-based operation related to the present disclosure.

In the example of FIG. 9, it is assumed that an AP MLD has three affiliated APs, i.e., AP 1 operating on link 1, AP 2 operating on link 2 and AP 3 operating on link 3. It is assumed that the beacon interval of link 1, link 2 and link 3 is 250ms, 200ms and 70ms, respectively.

Non-AP STA 2 belonging to a non-AP MLD may transmit an association request frame to AP 2 belonging to an AP MLD. Non-AP STA 2 may request a setup for three links (i.e., link 1 between AP 1 and non-AP STA 1, link 2 between AP 2 and non-AP STA 2 and link 3 between AP 3 and non-AP STA 3). The value of a listen interval field included in an association request frame may be configured as 1 and that value corresponds to a value in a unit of the maximum beacon interval (i.e., 250ms). Accordingly, the value of a listen interval requested by a non-AP MLD is 250ms.

AP 2 belonging to an AP MLD may accept two links (i.e., link 2 between AP 2 and non-AP STA 2 and link 3 between AP 3 and non-AP STA 3) for a ML setup by transmitting an association response frame to non-AP STA 1 belonging to a non-AP MLD.

Here, a listen interval requested by a non-AP MLD is still 250ms, which is not changed according to a link accepted in a ML setup procedure.

After a successful ML setup, non-AP STA 3 may enter a power-save mode. Afterwards, non-AP STA 2 may enter a power-save mode. For example, a PM set to a value of 1 may be signaled.

In this case, an AP MLD may buffer DL BU(s) for a non-AP MLD for at least 250ms. For example, at the time point T1, non-AP STA 2 is required to receive a beacon frame on link 2 and one of non-AP STA 2 or non-AP STA 3 belonging to a non-AP MLD is required to wake up before the time point T2 (e.g., T2 = T1 + 250ms) to receive at least one beacon frame. For example, non-AP STA 2 may receive the second beacon frame on link 2 (at T1 + 200ms), or non-AP STA 3 may receive the fourth beacon frame on link 3 (at T1 + 280ms). For brevity, the example of FIG. 9 illustratively shows a case in which the first beacon frame on all links is aligned to the same time point, but actually, the first TBTT on all links may not be aligned.

As described above, a STA may set a listen interval field within a (re)association request frame to a value corresponding to a listen interval length desired/requested by a corresponding STA and transmit it to an AP. The length of a listen interval requested by a STA may be determined by a STA based on information such as a TIM, a delivery TIM (DTIM), a beacon interval, etc. included in a beacon frame or a probe response frame, etc. received by a STA from an AP. When an AP may not accept a listen interval requested by a STA, it may transmit to a STA a (re)association response frame including a status code set to a value indicating rejection and a reason thereof (e.g., status code value 51 (denied due to too long listen interval (DENIED_LISTEN_INTERVAL_TOO_LARGE)). When an AP may accept a listen interval requested by a STA, an AP may set the value of a status code within a (re)association response frame to a value indicating acceptance and transmit it to a STA.

When based on a listen interval configured through this process, an AP buffers data to a STA (e.g., a beacon frame, a DL BU, etc.) and a STA goes into an awake state after a listen interval in a doze/sleep state and transmits a PS-Poll frame to an AP, an AP may transmit buffered data/frame to a STA in response thereto. If an AP does not receive a PS-Poll frame from a STA even after a listen interval, so it may not confirm whether a STA in a doze/sleep state was in the awake state or it confirms that a STA was not in the awake state, an AP may delete/discard data/frame buffered for a corresponding STA after a predetermined period of time.

A listen interval on a MLD may be configured through a negotiation including the exchange of a ML (re)setup request and a ML (re)setup response. A ML (re)setup request and a ML (re)setup response may be performed through the transmission/reception of a (re)association request frame and a (re)association response frame, respectively. A STA may set the value of a listen interval field included in a (re)association request frame based on the longest value among the beacon intervals of a plurality of APs within an AP MLD (i.e., by using the maximum value among the beacon intervals as a unit, e.g., as a value of an integer multiple of the maximum value). For example, APs belonging to an AP MLD have the beacon interval of a different value, and a listen interval at a MLD level may be configured based on one (e.g., the maximum) beacon interval among them (i.e., as a value of an integer multiple of one beacon interval).

### Operation for Enhanced MLD Listen Interval

As in the example of FIG. 8 described above, when a ML (re)setup for links 1, 2 and 3 is accepted, a listen interval whose unit is 250ms, the maximum value among the beacon intervals of links 1, 2 and 3 (i.e., an integer multiple of 250ms), may be configured. As in the example of FIG. 9, when AP 1 on link 1 has the maximum beacon interval within an AP MLD and link 1/AP 1 is rejected in a ML (re)setup process, a listen interval at a MLD level may be configured based on a beacon interval with the maximum value without considering whether a link/an AP is rejected.

The state of each link belonging to a ML may have an enabled state and a disabled state. An enabled state may correspond to a state in which data transmission or reception on a corresponding link is possible and a disabled state may correspond to a state in which data transmission or reception on a corresponding link is impossible. A disabled state and an enabled state may be temporary. In other words, a temporarily disabled link may return to an enabled state. In addition, the state of a link may include a deletion state. Unlike a disabled state, a deletion state corresponds to a state in which it may not return to an enabled state.

In the existing WLAN system, an operation for configuring a MLD listen interval is defined when a link/an AP with a beacon interval of the maximum value among the APs in an AP MLD where a ML (re)setup is requested is rejected, but how to configure a MLD listen interval is not defined when a link/an AP with a beacon interval of the maximum value is deleted. Even when a link/an AP with a beacon interval of the maximum value is deleted, when a MLD listen interval is configured or maintained based on a corresponding beacon interval, a MLD listen interval based on a beacon interval that is relatively longer than the beacon intervals of the remaining AP(s) that are not deleted is applied. In this case, there is a problem that an AP has to maintain a buffered frame for an unnecessarily long time and a STA operates in a power-save mode for an unnecessarily long time or during a time period that is not suitable for the beacon interval of the remaining AP(s).

As described above, for an operation for the existing MLD listen interval, a listen interval for an AP MLD may be determined through a ML setup process based on the longest listen interval among a plurality of APs. It is defined that even when a link or an AP associated with a MLD is excluded during a ML setup process or after a successful ML setup, a configured listen interval is not changed. In other words, in the existing WLAN system, a MLD listen interval is defined only as being determined as a unit of the maximum value among a plurality of beacon intervals for a plurality of links/APs of an AP MLD and a MLD listen interval is determined regardless of the state of a link/an AP. If an excluded link/AP is associated with the longest listen interval, there is a problem that an inefficiently long or unsuitable listen interval is applied to the remaining links/APs. Here, an excluded link/AP may correspond to the state of rejection, deletion or another name that does not belong to a MLD.

In order to eliminate or prevent this inefficiency, a new method for determining or updating/modifying a MLD listen interval based on a change in the state of a link/an AP is required.

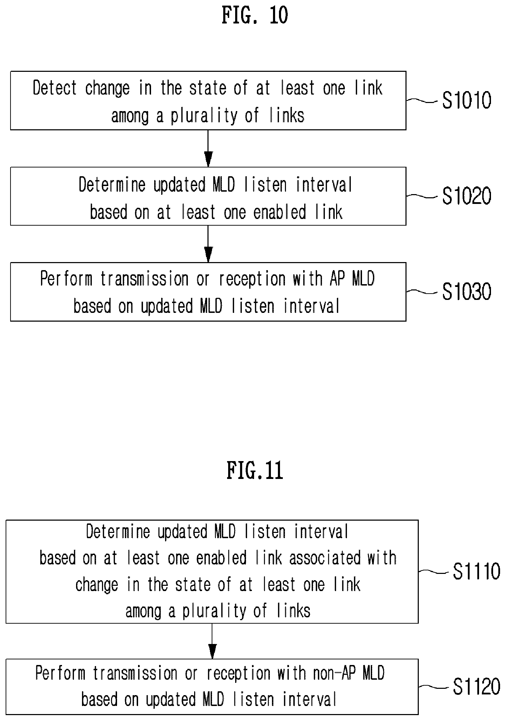

FIG. 10 is a diagram for describing an example of a method performed in a STA based on a MLD listen interval according to the present disclosure.

In S1010, a STA may detect a change in the state of at least one link among a plurality of links.

A STA may be one of a plurality of STAs in a non-AP MLD.

A change in the state of a link may correspond to a change in the state of an AP. For example, when a link/an AP corresponds to a state where it is excluded from a ML or a MLD (e.g., a state where it is deleted after a successful ML setup, a state where it is not accepted as a setup link during a ML setup (i.e., a rejection is indicated through a (re)association response to a (re)association request), etc.), a change in the state of a link/an AP may include a case in which the beacon interval of a link/an AP is changed/updated to a value longer than the existing beacon interval (e.g., a value longer than the existing maximum beacon interval among multiple links/APs belonging to a ML/a MLD (i.e., a value that is the basis/unit of a MLD listen interval)).

In S1020, a STA may determine an updated MLD listen interval based on at least one enabled link.

In other words, an updated MLD listen interval may be configured based on the maximum value of at least one beacon interval corresponding to at least one enabled link/AP (i.e., in a unit of the maximum value).

For example, when one link/AP of three links/APs is rejected/deleted, an updated MLD listen interval may be determined based on the maximum value among the beacon intervals of the remaining two enabled links/APs. If the beacon interval of a rejected/deleted link/AP is not the maximum value among the beacon intervals, a MLD listen interval may not be updated or may be configured as a different value (i.e., a change in a multiple of a beacon interval) even when it is based on the same beacon interval as before (i.e., in a unit of the same beacon interval).

For example, when the beacon interval of at least one link/AP is changed even if no link/AP is rejected/deleted among the three links/APs, an updated MLD listen interval may be determined based on the maximum value among the beacon intervals of enabled (e.g., all three) links/APs including a link/an AP with a changed beacon interval. If a changed beacon interval is a value smaller than a beacon interval that is the basis/unit of the existing MLD listen interval, a MLD listen interval may not be updated or may be configured as a different value (i.e., a change in a multiple of a beacon interval) even when it is based on the same beacon interval as before (i.e., in a unit of the same beacon interval).

A STA may obtain the beacon interval(s) of corresponding link(s)/AP(s) through a beacon frame or a probe response frame on each link and determine an updated MLD listen interval based on a beacon interval with the maximum value among them. In addition, each AP belonging to an AP MLD may obtain the beacon interval(s) of other AP(s) and determine an updated MLD listen interval based on a beacon interval with the maximum value among them. Here, when the value of a beacon interval on which the existing MLD listen interval is based (i.e., used as a unit) is updated to determine an updated MLD listen interval, an integer applied as a multiple of an updated beacon interval (i.e., X in the relation of "listen interval = X * beacon interval") may maintain an integer value (i.e., X) corresponding to a multiple applied to the calculation of the existing MLD listen interval as it is. Accordingly, an updated MLD listen interval determined respectively may be configured/calculated as the same value without any signaling exchange between an AP MLD and a non-AP MLD.

Additionally or alternatively, an updated MLD listen interval may be determined based on the exchange of a request and a response between a STA (or a non-AP MLD) and an AP (or an AP MLD) or based on an announcement from an AP (or an AP MLD). For example, a STA may determine an updated MLD listen interval and request an AP or may request an AP to update a MLD listen interval. In response, an AP may accept or reject a request from a STA or may provide a STA with information about a (changed) updated MLD listen interval. Alternatively, an AP may transmit information about an updated MLD listen interval to STA(s) without a request from a STA. A QoS null frame, a management frame, etc. may be used to transmit or receive information about this updated MLD listen interval. Here, when the value of a beacon interval on which the existing MLD listen interval is based (i.e., used as a unit) is updated to determine an updated MLD listen interval, an integer applied as a multiple of an updated beacon interval may maintain an integer value corresponding to a multiple applied to the calculation of the existing MLD listen interval as it is or an updated multiple value may be applied. In other words, an updated MLD listen interval including at least one of an updated (basic) beacon interval or an updated multiple may be configured through a request-response or an announcement between an AP MLD and a non-AP MLD.

In S1030, a STA may perform transmission or reception with an AP MLD based on an updated MLD listen interval.

For example, it may include that a STA enters a power-save mode (or a sleep mode or a doze mode) after receiving a beacon frame at the time point T1, and wakes up before the time point T2 to receive at least one beacon frame on one link of at least one enabled link. Here, the time point T2 is a time point X time interval after the time point T1, and X may correspond to an updated MLD listen interval.

A method described in the example of FIG. 10 may be performed by the first device (100) of FIG. 1. For example, at least one processor (102) of the first device (100) of FIG. 1 may be configured to detect a link state change, perform an operation for updating a MLD listen interval and perform transmission or reception with an AP MLD through at least one transceiver (106) based on an updated MLD listen interval. Furthermore, at least one memory (104) of the first device (100) may store instructions for performing a method described in the example of FIG. 10 or examples described below when executed by at least one processor (102).

FIG. 11 is a diagram for describing an example of a method performed in a AP based on a MLD listen interval according to the present disclosure.

In S1110, an AP may determine an updated MLD listen interval based on at least one enabled link associated with a change in the state of at least one link among a plurality of links.

An AP may be one of a plurality of APs in an AP MLD. Since a determination on an updated MLD listen interval based on a change in the state of a link and an enabled link is the same as a description for the example of FIG. 11, an overlapping description is omitted.

In S1120, an AP may perform transmission or reception with a non-AP MLD based on an updated MLD listen interval.

For example, an AP may determine a time for maintaining a DL BU for a non-AP MLD in a buffer based on an updated MLD listen interval. When a PS-Poll frame from a STA is received within a time during which a DL BU is maintained in a buffer, a corresponding DL BU may be transmitted to a STA. When a PS-Poll frame from a STA is not received within a time during which a DL BU is maintained in a buffer, an AP may discard a corresponding DL BU.

A method described in the example of FIG. 11 may be performed by the second device (200) of FIG. 1. For example, at least one processor (202) of the second device (200) of FIG. 1 may be configured to determine an updated MLD listen interval in association with a change in the state of a link and perform transmission or reception with a non-AP MLD through at least one transceiver (206) based on an updated MLD listen interval. Furthermore, at least one memory (204) of the second device (200) may store instructions for performing a method described in the example of FIG. 11 or examples described below when executed by at least one processor (202).

The examples of FIG. 10 and FIG. 11 may correspond to some of various examples of the present disclosure. Hereinafter, various examples of the present disclosure including the examples of FIG. 10 and FIG. 11 are described in more detail.

In embodiments described below, it is described by taking a case in which a link/an AP with the maximum beacon interval among a plurality of links/APs is excluded as a representative example to which the present disclosure is applied, but embodiments described below may be equally applied to various causes or various situations where the maximum beacon interval value among a plurality of beacon intervals corresponding to a plurality of links/APs is changed. In other words, for various situations where the maximum value among a plurality of beacon intervals is changed, a MLD listen interval may be updated/modified based on a changed maximum beacon interval.

### Embodiment 1

This embodiment may be applied to a case in which an AP having a beacon interval of the longest value among the APs of an AP MLD for which a ML setup is requested is deleted, a case in which the beacon interval of an AP in an AP MLD for which a ML setup is requested is updated to a value longer than the listen interval of a MLD level (or the value of a beacon interval that is the basis/unit of a MLD listen interval) and a case in which an AP MLD transmits a (re)association response frame including a status code corresponding to rejection (e.g., status code 51 (DENIED_LISTEN_INTERVAL_TOO_LARGE)) for the value of a listen interval field in the (re)association request frame of a ML setup request. A case to which this embodiment is applied is exemplary, not limited.

This embodiment may include determining the listen interval of an updated MLD level based on enabled link(s) associated with a change in the state of a link and performing transmission/reception between an AP MLD and a non-AP MLD based on an updated MLD listen interval.

A method for updating/modifying the listen interval of a MLD level may include an implicit method and an explicit method.

### Embodiment 1-1

According to this embodiment, MLD listen interval update may be updated/changed implicitly, i.e., without exchanging a separate negotiation message between MLDs (an AP MLD and a non-AP MLD). A STA (or a non-AP MLD) may obtain information about the beacon interval of an AP (i.e., each AP in an AP MLD) through a beacon frame or a probe response frame, etc. Both a non-AP MLD and an AP MLD may possess information about the beacon intervals of APs in an AP MLD. Accordingly, when two MLDs (i.e., an AP MLD and a non-AP MLD) recognize/detect that an AP with the beacon interval of the longest value in an AP MLD is excluded (e.g., deleted), two MLDs (i.e., an AP MLD and a non-AP MLD) may update/change the listen interval of a MLD level based on the value of the longest beacon interval among the APs excluding an excluded (e.g., deleted) AP in an AP MLD. In other words, a MLD listen interval may be determined based on (in a unit of) the beacon interval of the (remaining) enabled links/APs, not an excluded link/AP.

This implicit method may be applied when an AP provides a ML setup response indicating a specific status code (i.e., rejected due to a request for a listen interval that is too long) for the ML setup request of a STA. For example, status code 51 corresponds to a rejection reason meaning that the value of a listen interval field in the (re)association request frame of a ML setup requested by a non-AP MLD has the value of a length that is too long based on the beacon interval of the longest value among the beacon intervals of APs in an AP MLD. In this case, since both a non-AP MLD and an AP MLD acquire/own the value of all beacon intervals of APs in an AP MLD, two MLDs (i.e., an AP MLD and a non-AP MLD) may configure the listen interval of a MLD level based on a link/an AP with the beacon interval of the longest value in an AP MLD excluding a rejected link/AP.

### Embodiment 1-2

According to this embodiment, MLD listen interval update may be explicitly updated/changed, i.e., the listen interval of a MLD level may be updated/changed by transmitting/receiving a negotiation message between MLDs.

For example, based on a request frame transmitted from a non-AP MLD, an AP MLD may inform an updated MLD listen interval through a response frame. For example, an updated MLD listen interval may be informed to STA(s) by a frame announced by an AP. Such a request/response frame or an announcement frame may be defined and used as a new frame that is not defined previously. For example, such a new frame may be defined in a format that includes a listen interval field such as a QoS null frame, a management frame, etc.

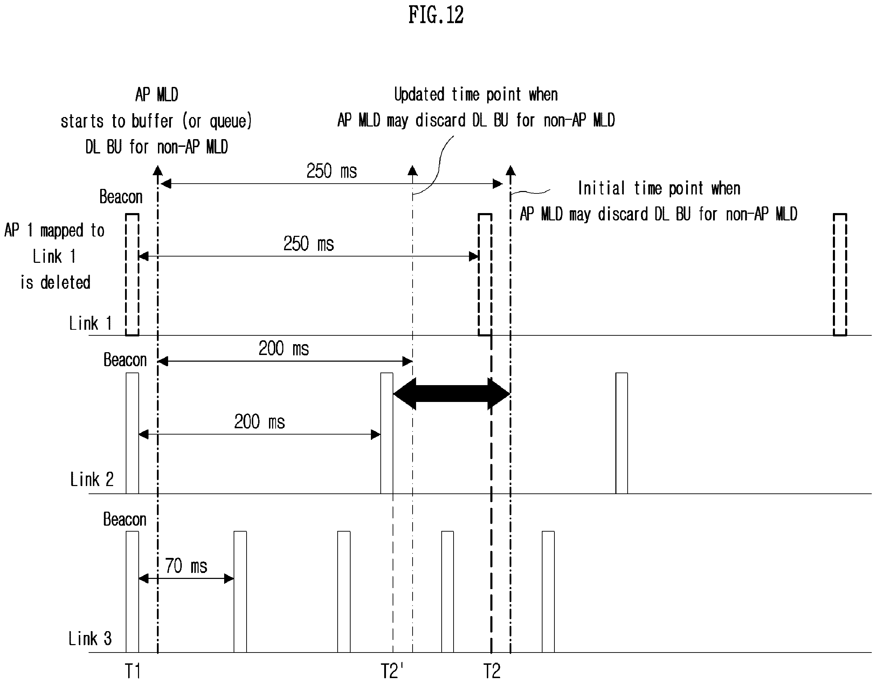

FIG. 12 is a diagram showing an example of a MLD listen interval-based operation according to the present disclosure.

The example of FIG. 12 assumes that links 1, 2 and 3 are accepted as a setup link through an initial ML setup and an initial MLD listen interval is configured as 250ms as in the example of FIG. 8, and then shows a case in which a MLD listen interval is updated in an explicit or implicit manner as in embodiments described above.

For example, when AP 1 on link 1 is deleted in an AP MLD, there may be a problem that an AP needs to unnecessarily buffer a DL BU because the length of an initially configured MLD listen interval (i.e., 250ms) is longer than a value based on the beacon interval of other APs. For example, an AP MLD may need to unnecessarily maintain a DL BU in a buffer from the second beacon frame on link 2 in FIG. 12 to an initial time point when an AP may discard a DL BU according to an initial configuration.

According to the present disclosure, the listen interval of a MLD level may be reconfigured/updated based on the maximum beacon interval among the remaining (enabled) links/APs (in a unit of the maximum beacon interval) excluding a deleted link/AP. An updated MLD listen interval may be determined based on the maximum value of 200ms (as an integer multiple of 200ms) among the remaining beacon intervals of 200ms and 70ms excluding 250ms, the beacon interval of link 1/AP 1.

For example, when an updated MLD listen interval is 200ms, a STA may wake up before the time point T2'(=T1 + 200ms) and receive at least one beacon frame or transmit a PS-Poll frame. In addition, a time point when an AP MLD may discard a DL BU may be changed (or advanced) to after the time point T2'.

In the existing WLAN system, since although some of a plurality of links/APs are rejected in a ML/MLD operation, a MLD listen interval is determined based on the maximum beacon interval including the beacon interval of a rejected link/AP, there may be a problem that an unnecessarily long MLD listen is configured. According to the present disclosure, a MLD listen interval may be determined/updated based on the maximum beacon interval among the beacon intervals for an enabled/available link/AP, so the effect of efficiently determining and applying an optimal MLD listen interval may be achieved.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

### [Industrial Applicability]

A method proposed by the present disclosure is mainly described based on an example applied to an IEEE 802.11-based system, 5G system, but may be applied to various WLAN or wireless communication systems other than the IEEE 802.11-based system.

## Claims

1. A method performed by a station (STA) in a wireless local area network (WLAN) system, the method comprising:
detecting, by the STA belonging to a non-access point (non-AP) multi-link device (MLD), a change in a state of at least one link among a plurality of links;
determining an updated MLD listen interval based on at least one enabled link; and
performing a transmission or a reception with an AP MLD based on the updated MLD listen interval.

2. The method of Claim 1, wherein:
the updated MLD listen interval is based on a maximum value among at least one beacon interval corresponding to the at least one enabled link.

3. The method of Claim 2, wherein:
a beacon interval for each of the at least one enabled link is acquired through a beacon frame or a probe response frame on a corresponding link.

4. The method of Claim 2, wherein:
the updated MLD listen interval is determined by each access point (AP) on the at least one enabled link.

5. The method of Claim 1, wherein:
the updated MLD listen interval is determined based on a response from an AP MLD for a request of the STA, or is determined based on an announcement from the AP MLD.

6. The method of Claim 5, wherein:
the updated MLD listen interval is based on a maximum value among at least one beacon interval corresponding to the at least one enabled link.

7. The method of Claim 5, wherein:
information about the updated MLD listen interval is included in at least one of a quality of service (QoS) null frame, or a management frame.

8. The method of Claim 1, wherein the change in the state of the at least one link includes:
the at least one link among the plurality of links being deleted after a successful multi-link (ML) setup, or
the at least one link among the plurality of links not being accepted as a setup link during a ML setup.

9. The method of Claim 8, wherein:
not being accepted as the setup link includes an association response or a reassociation response indicating an rejection for an association request or a reassociation request from the STA.

10. The method of Claim 1, wherein:
performing the transmission or the reception with the AP MLD based on the updated MLD listen interval includes that the STA enters a power-save mode after receiving a beacon frame at a time point of T1, and wakes up before a time point of T2 to receive a beacon frame or transmit a power save-poll (PS-Poll) frame on one link of the at least one enabled link,
T2 is T1+X, and X is the updated MLD listen interval.

11. The method of Claim 1, wherein:
a downlink bufferable unit (BU) for the non-AP MLD is buffered in the AP MLD based on the updated MLD listen interval.

12. A station (STA) device in a wireless local area network (WLAN) system, the device comprising:
at least one transceiver; and
at least one processor connected to the at least one transceiver,
wherein the at least one processor is configured to:
detect, by the STA belonging to a non-access point (non-AP) multi-link device (MLD), a change in a state of at least one link among a plurality of links;
determine an updated MLD listen interval based on at least one enabled link; and
perform, through the at least one transceiver, a transmission or a reception with an AP MLD based on the updated MLD listen interval.

13. A method performed by an access point (AP) in a wireless local area network (WLAN) system, the method comprising:
determining, by the AP belonging to an AP multi-link device (MLD), an updated MLD listen interval based on at least one enabled link associated with a change in a state of at least one link among a plurality of links; and
performing a transmission or a reception with a non-AP MLD based on the updated MLD listen interval.

14. An access point (AP) device in a wireless local area network (WLAN) system, the device comprising:
at least one transceiver; and
at least one processor connected to the at least one transceiver,
wherein the at least one processor is configured to:
determine, by the AP belonging to an AP multi-link device (MLD), an updated MLD listen interval based on at least one enabled link associated with a change in a state of at least one link among a plurality of links; and
perform, through the at least one transceiver, a transmission or a reception with a non-AP MLD based on the updated MLD listen interval.

15. A processing unit configured to control a station (STA) in a wireless local area network (WLAN) system, the processing unit comprising:
at least one processor; and
at least one computer memory operably connected to the at least one processor, and based on being executed by the at least one processor, storing instructions for performing a method according to any one claim of Claim 1 to Claim 11.

16. At least one non-transitory computer-readable medium storing at least one instruction,
wherein:
the at least one instruction controls a device to perform a method according to any one claim of Claim 1 to Claim 11 in a wireless local area network (WLAN) system by being executed by at least one processor.
